# EUROPÄISCHE PATENTSCHRIFT

(11) **EP 0 686 074 B1**
(45) Veröffentlichungstag und Bekanntmachung des Hinweises auf die Patenterteilung: **22.10.1997**
(21) Anmeldenummer: 94909077.3
(22) Anmeldetag: 26.02.1994
(51) Int. Cl.: B23Q 7/08

(54) **ZUFÜHRUNGSEINRICHTUNG AN WERKZEUGMASCHINEN, INSBESONDERE ZUR ENDBEARBEITUNG VON SCHRAUBENDREHER-BITS**
FEED DEVICE FOR MACHINE TOOLS, IN PARTICULAR FOR FINISHING SCREWDRIVER BITS
DISPOSITIF D'ALIMENTATION POUR MACHINES-OUTILS, PERMETTANT NOTAMMENT D'EFFECTUER DES TRAVAUX DE FINITION SUR DES EMBOUTS DE TOURNEVIS

(30) Priorität: 27.02.1993 DE 4306109; 16.04.1993 DE 4312526
(43) Veröffentlichungstag der Anmeldung: 13.12.1995
(73) Patentinhaber: WERA WERK HERMANN WERNER GmbH & CO., 42349 Wuppertal (DE)
(72) Erfinder: HEYM, Hans, Udo, D-42327 Wuppertal (DE)
(74) Vertreter: Grundmann, Dirk, Dr.
(86) Internationale Anmeldenummer: EP9400567
(87) Internationale Veröffentlichungsnummer: WO9419149

(56) Entgegenhaltungen:
- DE-C- 484 109
- DE-C- 3 827 889
- US-A- 4 794 831

## Beschreibung

Die Erfindung betrifft eine Werkzeugmaschine mit Zuführungseinrichtung mit am freien Ende einer Spindel angeordnetem Werkstück-Spannfutter gemäß Gattungsbegriff des Anspruchs 1.

Eine derartige Werkzeugmaschine ist aus der US-Patentschrift 4 794 831 bekannt. Dort werden rückwärtig der Spindel vereinzelte Werkstücke mittels einer Blasdüse rückwärtig in das Innere der Spindel eingeblasen. Es ist dort vor Kopf des Werkstück-Spannfutters eine zweite Blasdüse vorgesehen, welche in Achsrichtung der Spindel verlagerbar ist. Der Kopf dieser Blasdüse ist als Gummi-Anschlag ausgebildet. Beim Einschießen des Werkstückes von rückwärts wird dieser Gummi-Anschlag vor das Werkstück-Spannfutter verlagert, so daß das eingeschossene Einzel-Werkstück durch Anschlagen an diesem Anschlag abgestoppt wird. Nach dem Bearbeiten des Werkstückes öffnet sich die Spindel und die Zweite Druckluft-Blasdüse bläst das Werkstück durch die Spindel hindurch zurück aus dem Werkzeug-Spannfutter heraus.

Aus der deutschen Patentschrift 48 41 09 ist eine Vorrichtung zum Zuführen von kantigen Werkstücken für Werkzeugmaschinen bekannt. Dort wird das schwerkraftgeförderte Werkstück durch das Hindurchfallen durch verschiedene Vielecke allmählich in seine richtige Lage gedreht, wobei die Kanten des Werkstückes auf dachförmigen Flächen abgleiten sollen.

Dem Gegenstand der Erfindung liegt die Aufgabe zugrunde, eine Werkzeugmaschine der in Rede stehenden Art in herstellungstechnisch einfacher Weise zur Steigerung der Leistungsfähigkeit weiterzubilden.

Gelöst wird die Aufgabe in der im Anspruch 1 angegebenen Erfindung.

Zufolge dieser Ausgestaltung ist die Leistungsfähigkeit der Vorrichtung vergrößert worden. Zwischen dem Eingangsende und dem Spannfutter ist ein Bremsorgan angeordnet.

Ein in das Eingangsende der Achshöhlung der Spindel eingeschossenes Einzelwerkstück wird vor Erreichen des Anschlages mittels des Bremsorganes abgebremst. Hierdurch tritt das Werkstück mit verminderter Geschwindigkeit in das Futter ein. Der Impuls des Werkstückes beim Auftreffen auf den Anschlag ist dadurch vermindert. In vorteilhafter Weise wird dadurch eine Beschädigung eines beispielsweise angespitzten Werkstückes beim Aufschlag auf den Anschlag trotz zunächst hoher Einschußgeschwindigkeit verhindert. Darüber hinaus verringert sich die Tendenz, daß das Werkstück am Anschlag abprallt und erst nach mehrmaligem Auftreffen auf dem Anschlag zur Ruhe kommt, bis es durch das Spannfutter gefaßt wird. Erfindungsgemäß ist vorgesehen, daß das Werkstück durch Luftdruckbeaufschlagung in das Eingangsende der Achshöhlung der Spindel eingeschossen wird. Durch die stetige Luftdruckbeaufschlagung beschleunigt das Werkstück in der Achshöhlung. Vor Erreichen des Spannfutters wird die Geschwindigkeit durch das Bremsorgan reduziert, so daß das Werkstück mit verminderter Geschwindigkeit das Bremsorgan verläßt. Das Bremsorgan wird von einem elastisch ausweichbaren Vorsprung, der in den Querschnitt des rotierenden von der Achshöhlung gebildeten Zuführungskanal ragt, gebildet. Dabei kann zusätzlich vorgesehen sein, daß die Achshöhlung zwischen dem Eingangsende und dem Bremsorgan zunächst einen runden Vorsprung hat und nach dem Bremsorgan einen unrunden Querschnitt hat. Die Abbremsung der Axialbewegung des Werkstückes erfolgt gleichzeitig mit einer rotativen Beschleunigung des Werkstückes auf die Drehzahl der Spindel. Bevorzugt ist das Bremsorgan unmittelbar vor dem Spannfutter angeordnet. Ein durch den von der Achshöhlung gebildeten Zuführungskanal eingeschossenes Werkstück wird durch Verlagerung des Bremsorganes abgebremst. Es ist aber auch vorgesehen, daß das Bremsorgan von einer Reibfläche ausgebildet wird, wobei diese Reibfläche ebenfalls elastisch in den Querschnitt der Achshöhlung ragt. Bevorzugt rotiert die Achshöhlung im Bereich des Bremsorganes. Hierdurch wird die Drehzahl von Werkstück und Spindel synchronisiert. Es ist vorteilhaft, wenn zum Beladen und Entladen nur eine einzige Blasdüse verwendet wird. Die Druckluft wird von der rückwärtig des Werkstück-Spannfutters angeordneten Druckluft-Blasdüse im gedoppelten Takt zur Bearbeitung in gleiche Richtung zugeführt. Mit dem ersten Luftstoß wird das Werkstück in das Spannfutter hineingeschossen. Nach dem Anstoßen an den Anschlag wird die Bewegung aus dem Werkstück genommen. Zufolge der noch nachströmenden Druckluft ist ein gegebenenfalls auftretendes Abprallen des Werkstückes unschädlich. Es wird durch die Druckluft immer wieder zum Anschlag hin verlagert, so daß es dort nach kürzester Zeit in Anlage tritt. Nachdem der Anschlag rückverlagert wird und die Bearbeitung des Werkstückes erfolgt ist, öffnet sich das Werkstück-Spannfutter und der zweite Druckluft-Stoß stößt das Werkstück aus dem Spannfutter aus und zwar vorbei am zurückgesteuerten Anschlag. Das Werkstück landet dann in einer beispielsweise unterhalb der Spindel angeordneten Werkstückaufnahme-Vorrichtung. Die Weiterbildung der gattungsgemäßen Gestaltung zeichnet sich durch eine erhöhte Wirtschaftlichkeit aus. Gegenüber der eingangs genannten und insbesondere anderen bekannten Ausgestaltungen lassen sich die Stück-Bearbeitungszeiten in nicht unerheblichem Maße verringern. Die Werkstücke werden nicht, wie auch üblich, hintereinanderliegend durch die Spindel von rückwärts her durchgeschoben, sondern jeweils als Einzel-Werkstück mittels Druckluft durch die Spindel bei geöffnetem Werkstück-Spannfutter getrieben. Der im Bearbeitungstakt vor den Kopf des Werkstück-Spannfutters tretende Anschlag verhindert dabei, daß das Einzel-Werkstück aus dem Futter herausfällt. Durch den Anschlag wird erreicht, daß stets ein geforderter Überstand des Werkstücks über das Werkstück-Spannfutter vorliegt. Verbunden damit sind genaue Bearbeitungen an den Werkstücken möglich. Sobald das Werkstück seine durch den Anschlag begrenzte vorschriftsmäßige Lage erreicht hat, schließt das Werkstück-Spannfutter, der Anschlag fährt zurück und die Bearbeitung des Werkstücks an der Werkzeug-Station beginnt. Das Einschießen des Einzel-Werkstücks mittels Druckluft kann bei laufender Spindel geschehen, so daß die Stop- und Anlaufzeiten nicht als Verlustzeiten bei der Bearbeitung auftreten. Als zu bearbeitendes Werkstück kommt bevorzugt ein Schraubendrehereinsatz-Rohling in Betracht. Dieser hat einen im Querschnitt hexagonalen Einspannabschnitt und einen zylindrischen vorderen Abschnitt, in welchen dann durch Fräswerkzeuge eine Profilierung eingeschnitten werden soll. Der Anschlag, gegen welchen das Werkstück eingeschossen wird, wird bevorzugt quer zur Spindelachsenrichtung verlagert. Dabei kann entweder eine Linearverlagerung senkrecht zur Spindelachsenausrichtung oder eine Schwenkverlagerung vorgesehen sein. Bei letzterer liegt die Schwenkachse des Anschlages vorzugsweise parallel zur Spindelachse. Zufolge dieser Ausgestaltung läßt sich der Abstand des Anschlages zum Werkstück-Spannfutter reproduzierbar wiederholen.

Eine vorteilhafte Weiterbildung besteht darin, daß die Druckluft im gedoppelten Takt zur Werkstückbearbeitung zugeführt wird, derart, daß ein Takt zum Zuführen des Werkstücks und der nächste Takt zum Ausstoßen desselben vorbei an dem zurückgesteuerten Anschlag dient. Vorher wurde ausgeführt, daß während der Bearbeitung des Werkstücks der Anschlag zurückgesteuert ist. In dieser Position verbleibt dieser zunächst. Nach Fertigbearbeitung des Werkstücks öffnet das Werkstück-Spannfutter, so daß mittels Druckluft das Werkstück aus dem Spannfutter austreibbar ist. Danach fährt der Anschlag in seine Anschlagposition. Dann wird beim nächsten Takt das Werkstück durch die Spindel zum Werkstück-Spannfutter geschickt, und zwar bis zur Anlage an dem vorgesteuerten Anschlag.

Ferner zeichnet sich eine bevorzugte Weiterbildung dadurch aus, daß zum Zuführen von Werkstücken mit unrunden, z.B. mehreckigen Querschnitten, z.B. Bits, die Druckluft das Werkstück gegen eine sich kontinuierlich drehende Übergangsstufe zwischen unrunder, dem Werkstückquerschnitt angepaßter Querschnittsform und einer dazu einhüllenden Querschnittsform der Achshöhlung der Spindel drückt und zur Drehungsmitnahme nach Abbremsung der Axialbewegung dem unrunden Bereich übergibt. Dabei bildet die in Form einer Bohrung gestaltete Achshöhlung die einhüllende Querschnittsform, an welche sich der unrunde Bereich anschließt. Letzterer ist dem Querschnitt des mehreckigen Bits angepaßt. Der von der Druckluft beaufschlagte Bit durchwandert die Achshöhlung und wird von der Stufe aufgehalten, da in der Regel keine fluchtende Übereinstimmung zwischen den Querschnitten von unrundem Bereich und Bit und gleichzeitiger Drehzahlsynchronisation vorliegt. Aufgrund der innewohnenden Trägheit des Bits findet eine Relativverdrehung zwischen Bit und unrundem Bereich statt, so daß der Bit auch in eine fluchtende Stellung zum unrunden Bereich gelangt. Die Druckluft kann daher den Bit weiter durchtreiben bis zum Anschlag. Die dann vorliegende formschlüssige Halterung des Bits führt zu einer guten Drehmitnahme. Ferner braucht das Werkstück-Spannfutter nur geringfügig geöffnet zu werden, um den Bit aufnehmen zu können. Auch hieraus resultieren Zeiteinsparungen beim Spannen und Öffnen des Spannfutters.

Damit die Werkstücke vereinzelt durch die Achshöhlung geschickt werden, ist eine die Einzel-Werkstücke hintereinanderliegend aufnehmende Rutsche und eine zwischen dieser und dem Eingangsende der Achshöhlung der Spindel angeordnete Vorrichtung vorgesehen zum Abteilen je eines Werkstückes in die Einschießposition vor dem Eingangsende, rückwärtig welcher Abteil-Vorrichtung eine Druckluft-Blasdüse angeordnet ist. Die Rutsche kann dabei in Form eines Rohres gestaltet sein, welches von den Werkstücken durchwandert wird. Von dort her gelangen die Einzel-Werkstücke in die Einschießposition vor das Eingangsende.

Im Detail sieht die Abteil-Vorrichtung so aus, daß sie aus einem im Takt hin- und zurückgesteuerten Schieber besteht. Auf diesen gelangen die Einzel-Werkstücke nach Verlassen der Rutsche und werden dann in die Einschießposition durch Schieberverlagerung gebracht.

Sodann ist vorteilhafterweise vorgesehen, daß der Anschlag zum Abstoppen des Einzel-Werkstücks von einem im Bearbeitungstakt hin- und rückfahrenden Finger gebildet ist. So kann nicht der Fall eintreten, daß das Ausschießen des Werkstücks durch Druckluft behindert wird. Der Finger nimmt ausschließlich seine Vortrittsstellung ein, wenn ein Einzel-Werkstück eingeschossen wird.

Bevorzugt ist vorgesehen, daß die Übergangsstufe vom einhüllenden Querschnitt in den unrunden Querschnitt im Bereich des Werkstück-Spannfutters liegt.

Unterschiedliche Bearbeitungen lassen sich an dem Werkstück dadurch erzeugen, daß die Werkzeug-Station als Schlagmesser-Fräskopf gestaltet ist, dessen Werkzeugwelle sich vor Kopf des Werkstück-Spannfutters versetzt zur Spindel erstreckt und in einem konstanten Drehzahlverhältnis zur Spindel umläuft, welches abhängig ist von der Anzahl der am freien Ende des Einzel-Werkstücks anzubringenden Profilflächen. Liegt eine quergerichtet zur Spindel sich erstreckende Werkzeugwelle vor, so können Längsnuten am Werkstück erzeugt werden. Eine achsparallele Ausrichtung der Werkzeugwelle zur Spindel erlaubt es, Mehrkantflächen am Werkstück herzustellen.

Damit der Anschlag und Werkzeugwelle sich nicht gegenseitig nachteilig beeinflussen, ist die Werkzeugwelle in Gegenüberlage angeordnet zu dem den Anschlag bildenden Finger.

Weiterhin ist es noch von Vorteil, daß der Abteilschieber eine unterhalb der Rutsche tretende Nut zum Einfallen des Einzel-Werkstücks besitzt, welche Nut nach Übertritt des Schiebers in seine Position vor dem Eingangsende der Spindel von einer Decke der Vorrichtung verschlossen ist. Dadurch kann das Übergeben des Einzel-Werkstücks von der Rutsche an den Schieber problemlos erfolgen. Fährt danach der Schieber in die Übergabeposition, ist die Nut nach oben hin geschlossen, so daß die Druckluft bestimmungsgemäß das Einzel-Werkstück in Richtung des Werkstück-Spannfutters schießt.

Verbessert wird das drehwinkelgerechte Ausrichten in Kombination mit dem Abbremsen eines mehreckigen Bits auf den unrunden Bereich durch der drehenden Übergangsstufe zugeordnete, gegen die Mehrkantflächen des Werkstücks tretende, in Anlehnung an den unrunden Bereich angeordnete, in radialer Einwärtsrichtung federnd beaufschlagte Winkellagen-Justierkörper. Letztere bewirken eine zwangsläufige Drehausrichtung des mehreckigen Werkstücks in der Weise, daß dabei die fluchtende Ausrichtung von Werkstückquerschnitt und demjenigen des unrunden Bereiches vorliegt. Das Ausrichten findet selbst bei maximal verdrehter Stellung des Werkstücks zum unrunden Bereich statt, und zwar sehr kurzfristig. Andererseits sind die Winkellagen-Justierkörper so positioniert, daß sie bei eventuell fluchtender Ausrichtung des mehreckigen Werkstücks zum unrunden Bereich den Transport des Werkstücks nicht behindern.

Als vorteilhaft erweist es sich, die Winkellagen-Justierkörper als Rollkörper mit in Achsrichtung liegender Mantelflächenkrümmung zu gestalten, welche der Werkstück-Transportrichtung zugekehrt ist. Die Mantelflächenkrümmung der Rollkörper erzeugt dabei in gewisser Hinsicht einen Zentriereffekt unter Vermeidung eines auch nur kurzfristigen Staues beim Durchlauf des Werkstücks.

Ist das Werkstück als Schraubendreher-Bit gestaltet mit einem Sechskant, so empfiehlt es sich bei ebenfalls vorliegendem Sechskantquerschnitt des unrunden Bereichs, drei Rollkörper in gleichmäßiger Winkelverteilung vorzusehen.

Alternativ ist es möglich, daß die Rollkörper als bis auf das Maß des Mehrkantes vortretende Kugeln gestaltet sind. Diese Bauform ist konstruktiv sehr einfach und zeichnet sich durch hohe Zuverlässigkeit aus. Es ist stets dafür Sorge getragen, daß die Kugeln nicht zu weit in den Durchtrittsbereich für das Werkstück hineinragen.

Anders als bei der gattungsbildenden Vorrichtung gemäß der US-Patentschrift 4 794 831 erfolgt die Druckluftzuführung von einer einzigen Druckblas-Düse, welche die Druckluft immer in derselben Richtung durch die Spindel hindurchstößt.

Die Ausgestaltung des Bremsorgans als abgefederte, als Kugeln ausgebildete Rollkörper findet aber auch unabhängig von der Querschnittsform der Werkstücke Verwendung. Es ist von Bedeutung, daß die Bremsorgane querschnittsvermindernd in den Zuführungskanal ragen. Die rotationssymmetrisches Werkstück wird dann abgebremst, wenn der größte Querschnitt des Werkstückes größer ist als die durch die Bremskörper verminderte Querschnittskontur des Zuführkanals.

Nachstehend werden zwei Ausführungsbeispiele anhand der Zeichnungen erläutert. Es zeigt
- Figur 1: einen Längsschnitt durch die Vorrichtung plus Spindel, deren Werkstück-Spannfutter eine Werkzeugwelle zugeordnet ist, betreffend eine Ausführungsform, die das Verständnis der Erfindung erleichtern soll, jedoch keine Ausführungsart der Erfindung darstellt,
- Figur 2: die Ansicht in Pfeilrichtung II in Figur 1,
- Figur 3: die Ansicht in Pfeilrichtung III in Figur 2, teilweise aufgebrochen,
- Figur 4: eine Draufsicht auf die Vorrichtung mit in Beladestellung befindlichem Schieber,
- Figur 5: eine der Figur 4 entsprechende Darstellung, wobei der Schieber in die Einschießstellung gefahren ist,
- Figur 6: in schematischer Darstellung die Beladestellung des Schiebers bei zurückverlagertem Anschlag,
- Figur 7: die Folgedarstellung, wobei der Schieber in die Einschießposition des Werkstücks vorverlagert ist, bei in Abstützstellung getretenem Anschlag,
- Figur 8: die Folgedarstellung bei zurückverlagertem Anschlag und in Arbeitsposition getretener Werkzeugwelle sowie die Beladestellung einnehmendem Schieber,
- Figur 9: die Folgedarstellung, wobei mittels der Druckluft-Blasdüse das fertig bearbeitete Werkstück ausgestoßen wird,
- Figur 10: in Einzeldarstellung einen Längsschnitt durch das dem Spannfutter zugekehrte Ende der Spindel, wobei im Bereich der Übergangsstufe Winkellagen-Justierkörper vorgesehen sind, betreffend eine erfindungsgemäße Ausführungsform der Vorrichtung,
- Figur 11: den Schnitt nach der Linie XI-XI in Figur 10,
- Figur 12: in Detaildarstellung einen Querschnitt durch die Spindel im Bereich der Winkellagen-Justierkörper, wobei der Sechskant des Werkstücks seine ungünstigste Drehausrichtung zu den Winkellagen-Justierkörpern einnimmt, und
- Figur 13: eine der Figur 12 entsprechende Darstellung, wobei die als Kugeln gestalteten WinkellagenJustierkörper bis auf das Maß des Mehrkantes vorgetreten sind bei strichpunktiert veranschaulichtem unrunden Bereich des Spannfutters.

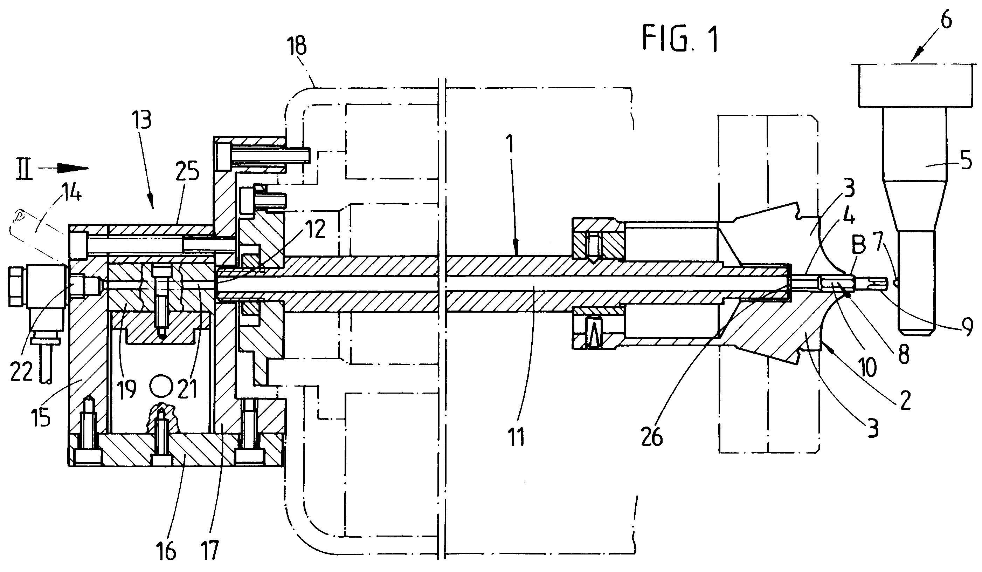

Gemäß der ersten Ausführungsform ist mit der Ziffer 1 die drehangetriebene Spindel einer Schlagmesser-Fräsmaschine bezeichnet. An ihrem einen freien Ende trägt die Spindel ein automatisch schließendes und öffnendes Spannfutter 2. Die Innenflächen der Spannbacken 3 formen einen unrunden Bereich 4 in Art einer Sechskanthöhlung. Quergerichtet zur Spindel 1 erstreckt sich vor Kopf des Werkstück-Spannfutters 2 eine Werkzeugwelle 5 einer Werkzeug-Station 6. Die Werkzeugwelle 5 ist bestückt mit einem Schlagmesser 7 und läuft in einem konstanten Drehzahlverhältnis zur Spindel 1 um. Das Drehzahlverhältnis ist abhängig von der Anzahl der am freien Ende eines Einzel-Werkstückes 8 einzuarbeitenden Längsnuten 9. Bezüglich des Einzel-Werkstücks 8 handelt es sich beim Ausführungsbeispiel um einen Schraubendreher-Bit B. Das eine Ende desselben ist als Sechskant 10 gestaltet, während das andere, abgedrehte Ende die Längsnuten 9 besitzt, um einen Formschlußangriff an einer Schraube zu erhalten. In Figur 1 ist dargestellt, daß der Sechskant 10 in dem unrunden Bereich 4 des Werkstück-Spannfutters 2 einliegt und dort eingespannt ist.

Das Werkstück-Spannfutter 2 ist im übrigen fest mit der Spindel 1 verbunden. Das bedeutet, daß beide zusammen umlaufen. Zentral ist in der Spindel 1 eine durchgehende Achshöhlung 11 vorgesehen. Es liegt eine kreisförmige Querschnittsform derselben vor. Der Durchmesser der Achshöhlung entspricht dem Eckmaß des Sechskants 10, so daß ein Schraubendreher-Bit B die Achshöhlung 11 passieren kann, wobei diese eine in Bezug auf den Sechskant 10 einhüllende Querschnittsform bildet.

Vor dem dem Werkstück-Spannfutter gegenüberliegenden Eingangsende 12 der Spindel 1 erstreckt sich eine Zuführungseinrichtung 13 zum Zubringen von Werkstücken 8. Im Detail beinhaltet die Zuführungseinrichtung eine die Einzel-Werkstücke hintereinanderliegend aufnehmende Rutsche 14, welche in Form eines Rohres gestaltet ist. Diese steigt schräg an. Das untere Ende der Rutsche 14 durchgreift eine senkrecht zur Spindel 1 ausgerichtete Wange 15. Über eine Fußplatte 16 ist sie mit einer parallel zu ihr ausgerichteten Wange 17 verbunden, welch letztere ortsfest an einem die Spindel 1 umgebenden, strichpunktiert angedeuteten Gehäuse 18 befestigt ist. Zwischen den Wangen 15, 17 ist ein eine Abteil-Vorrichtung bildender Schieber 19 geführt, welcher im Takt hin- und zurücksteuerbar ist. Der Antrieb des Schiebers 19 ist nicht näher veranschaulicht, erfolgt jedoch beim Ausführungsbeispiel über Druckluft.

Bei zurückgesteuertem Abteil-Schieber 19 erstreckt sich unterhalb der Austrittsöffnung der Rutsche 14 eine in den Abteil-Schieber 19 eingearbeitete, nach oben hin offene Nut 20 zur Aufnahme je eines Einzel-Werkstücks 8. Parallel zur Nut 20 verläuft im Schieber 19 eine durchgehende Blasöffnung 21. Der Mittenabstand zwischen Nut und Blasöffnung 21 entspricht dem Hub des Schiebers 19. Bei zurückverlagertem Schieber 19 fluchtet die Blasöffnung 21 mit der Achshöhlung 11 und erstreckt sich unmittelbar vor dem Eingangsende 12. Ferner fluchtet die Blasöffnung 21 in dieser Stellung mit einer Druckluft-Blasdüse 22, die an der Wange 15 festgelegt ist und in Verbindung steht mit der Blasöffnung 21. Die Druckluft-Blasdüse 22 steht in Verbindung mit einem nicht dargestellten Druckluft-Erzeuger.

Ferner besitzt die Werkzeugmaschine eine vor Kopf des Werkstück-Spannfutters 2 angeordnete Führung 23 zur Aufnahme eines Anschlages 24, welcher als im Bearbeitungstakt hin- und rückfahrender Finger gestaltet ist. Der Anschlag 24 fährt bis auf Höhe der Achshöhlung und stellt eine Begrenzung für das vom Werkstück-Spannfutter aufgenommene Einzel-Werkstück 8 dar.

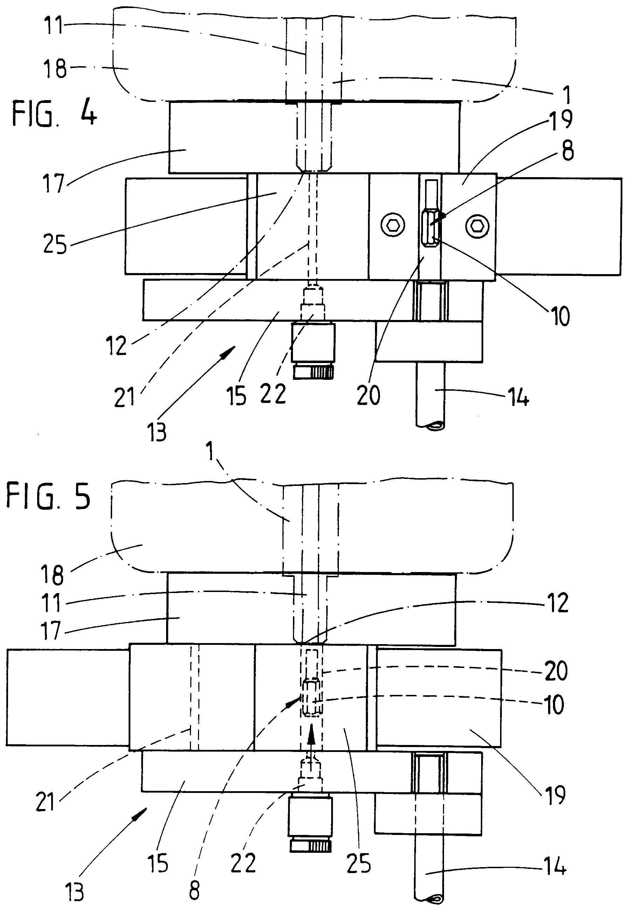

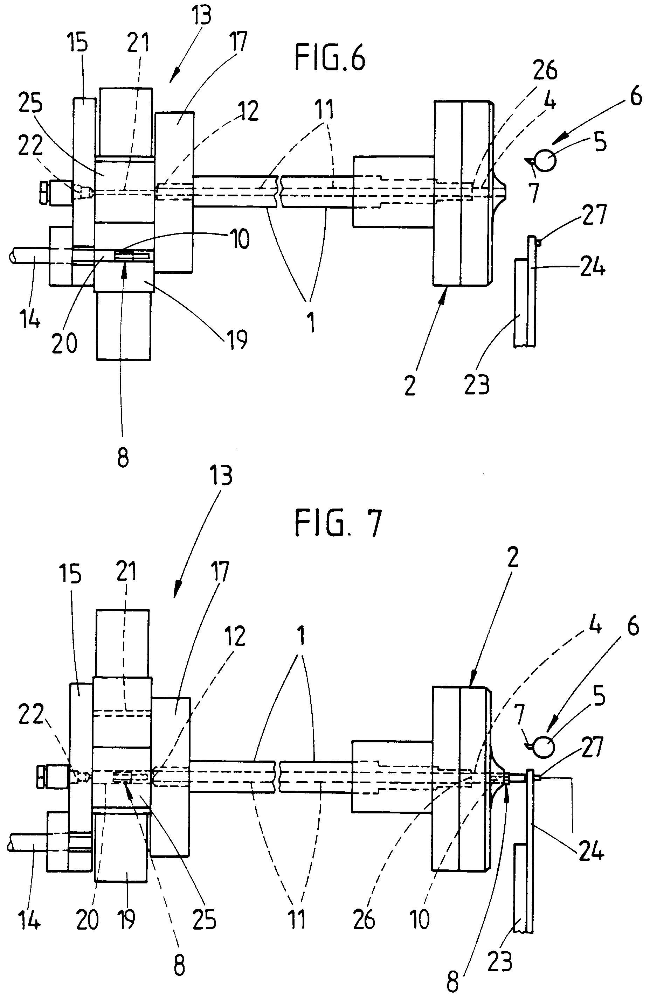

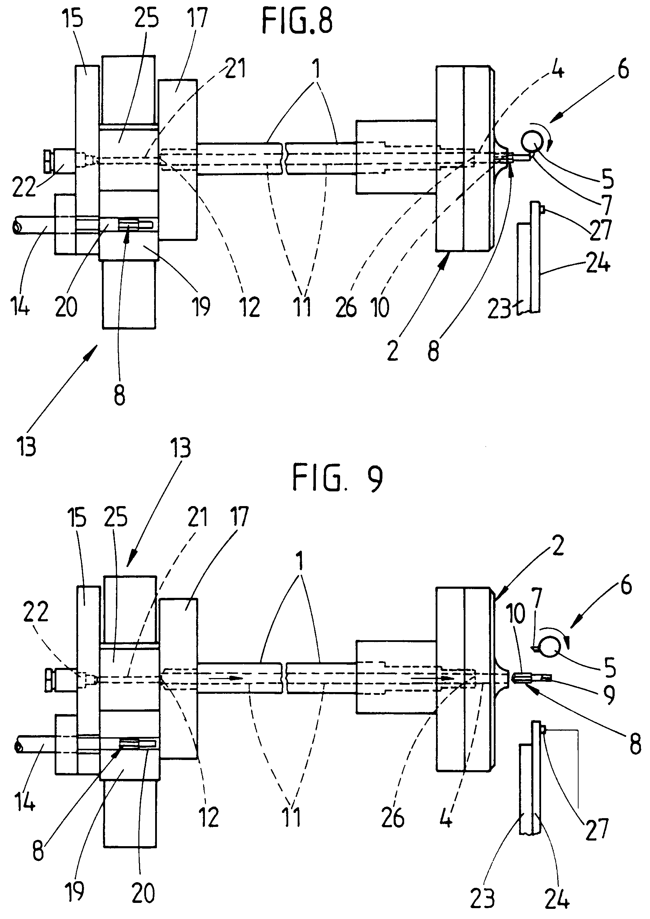

Es stellt sich folgende Wirkungsweise ein:
Die Spindel 1 läuft während der Bearbeitung von Einzel-Werkstücken 8 ständig um. Dies ist auch der Fall während des Öffnens und Schließens des Werkstück-Spannfutters 2. Figur 4 und 6 veranschaulichen die Ausgangsstellung. In dieser ist der Schieber 19 zurückgefahren; gleiches gilt auch für den Anschlag 24. In der zurückgefahrenen Stellung des Schiebers 19 fluchtet die Nut 20 mit der Austrittsöffnung der Rutsche 14, so daß ein Einzel-Werkstück 8 in die Nut 20 eintreten kann. Daraufhin wird der Impuls zur Verlagerung des Schiebers 19 und des Anschlages 24 gegeben. Letzterer fährt in die Stellung gemäß Figur 7 und kreuzt somit mit seinem vorderen Bereich die durch die Achshöhlung 11 gehende Mittellinie. Ebenfalls fährt der Schieber 19 vor. Die Nut 20 gelangt dadurch in fluchtende Lage zur Achshöhlung 11 der Spindel 1 und zur Druckluft-Blasdüse 22. In dieser Vortrittsstellung des Schiebers 19 wird die Nut 20 von einer zwischen den Wangen 15, 17 sich erstreckenden Decke 25 verschlossen. Die taktweise Druckluft ausstoßende Druckluft-Blasdüse 22 wird nun mit Druckluft gespeist, wodurch das Einzel-Werkstück 8 in die Achshöhlung 11 hineingeschossen wird, und zwar bei drehender Spindel 1. Das Einzel-Werkstück 8 tritt mit seinem kreisförmigen Querschnitt in den unrunden Bereich 4 hinein. Es kann dann noch der Fall sein, daß bei nicht fluchtender Ausrichtung von Sechskant 10 und unrundem Bereich 4 sich der Sechskant 10 an der Übergangsstufe 26 zwischen der einhüllenden Querschnittsform und der formangepaßten Querschnittsform abstützt. Aufgrund seiner Trägheit gelangt jedoch das Einzel-Werkstück 8 mit seinem Sechskant in fluchtende Übereinstimmung mit dem unrunden Bereich 4 des Werkstück-Spannfutters 2, woraufhin die Druckluft das Einzel-Werkstück 8 weiter vortreibt. Begrenzt ist die Vortrittsbewegung durch den Anschlag 24, vergl. Figur 7. Ein am Anschlag 24 befindlicher Impulsgeber 27 registriert die vorschriftsmäßige Lage des Einzel-Werkstücks, woraufhin das Spannfutter 2 schließt und den Sechskant 10 teilweise bzw. auf ganzer Länge einspannt. Einhergehend fährt auch der Anschlag 24 zurück, während die diesem gegenüberliegende Werkzeugwelle 5 des Schlagmesser-Fräskopfs in die Bearbeitungsstellung fährt und die Längsnuten 9 am kreisförmigen Endabschnitt des Einzel-Werkstücks einarbeitet. Synchron hierzu ist auch der Schieber 19 zurückgefahren, so daß dessen Nut 20 mit der Austrittsöffnung der Rutsche 14 fluchtet. Ein neues Einzel-Werkstück 8 tritt dann in die Nut 20 ein. In dieser zurückgefahrenen Stellung fluchtet auch die Blasöffnung 21 des Schiebers 19 sowohl mit der Achshöhlung 11 der Spindel 1 als auch mit der Druckluft-Blasdüse 22. Sobald die Bearbeitung des Einzel-Werkstücks 8 erfolgt ist, fährt die Werkzeugwelle 5 in ihre Ausgangsstellung zurück. Das Werkstück-Spannfutter 2 öffnet, und durch den nächsten Takt der Druckluft-Blasdüse 22 wird Druckluft durch die Blasöffnung 22 in die Achshöhlung 11 geleitet, wodurch das bearbeitete Einzel-Werkstück 8 ausgetrieben wird, vergl. Figur 9. Dann wiederholt sich der zuvor geschilderte Vorgang.

Alternativ wäre es auch möglich, die Achshöhlung 11 in unrundem Querschnitt zu erstellen, so daß deren Querschnitt demjenigen des Sechskants 10 angepaßt ist. In diesem Falle würde dann am Eingangsende der Spindel die Übergangsstufe auftreten. Beim dargestellten Ausführungsbeispiel befindet sich die Obergangsstufe 26 im Bereich des Werkstück-Spannfutters 2.

Weiterhin wäre es möglich, zwei Druckluft-Blasdüsen der Abteil-Vorrichtung zuzuordnen. Die eine Blasdüse kann dann zum Austreiben des fertig bearbeiteten Einzel-Werkstücks dienen, während die andere Blasdüse das Einschießen des Einzel-Werkstücks bewirkt.

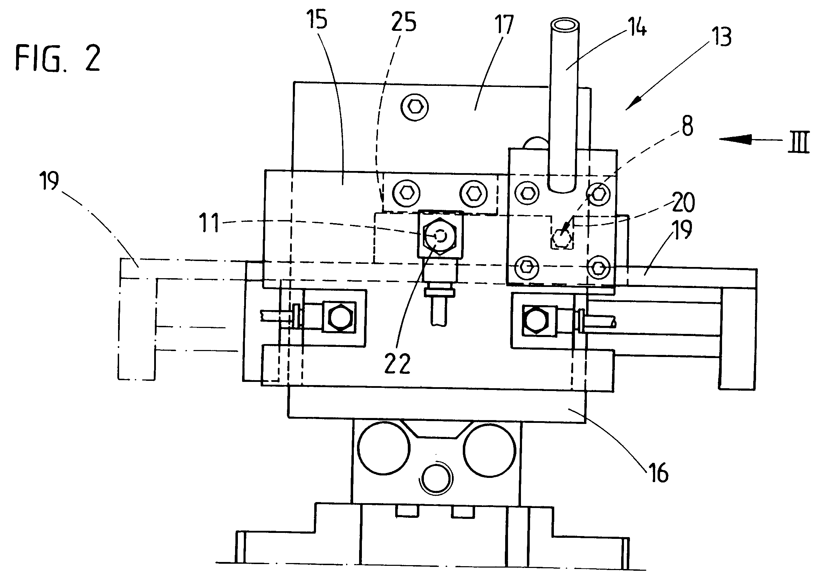

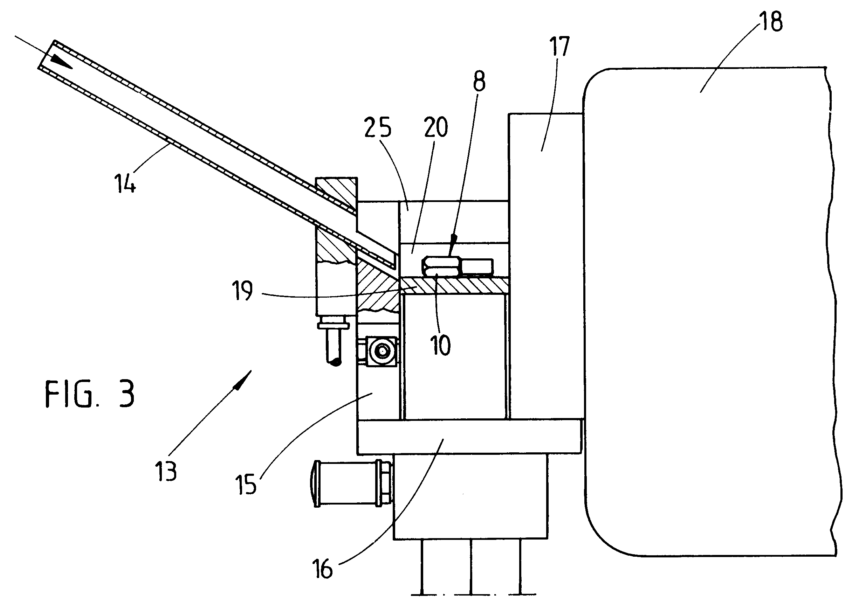

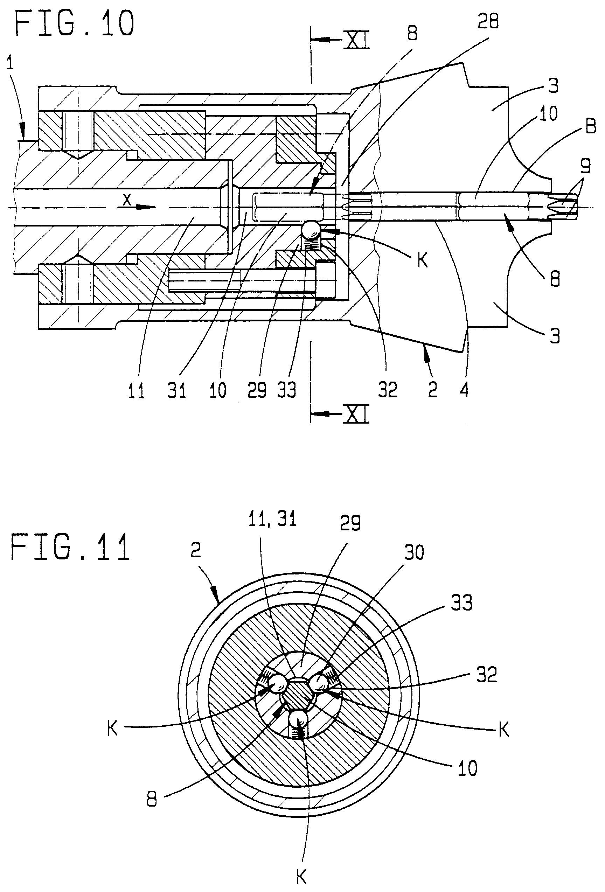

Die vorstehenden, sich auf die Fig. 1 bis 9 beziehenden, Ausführungen betreffend die allgemeine Funktionsweise einer Werkzeugmaschine mit von rückwärts mittels Druckluft durch die Spindel in das Werkstück-Spannfutter zugeführten Werkstücken. Die Ausgestaltung des erfindungsgemäßen elastischen Vorsprunges beschreiben beispielhaft die Fig. 10 bis 13.

Bei der in Figur 10 bis 13 veranschaulichten zweiten Ausführungsform tragen gleiche Bauteile gleiche Bezugsziffern. Die das Spannfutter 2 tragende Spindel 1 ist ebenfalls mit einer im Querschnitt kreisförmigen Achshöhlung 11 ausgestattet. Die Spindel 1 läuft mit dem Spannfutter 2 ständig um, und zwar auch während der Beschickung des Spannfutters mit einem Schraubendreher-Bit B wie auch bei einem Entnehmen desselben aus dem Spannfutter 2. Ferner formen die Innenflächen der Spannbacken 3 des Spannfutters 2 einen zentralen unrunden Bereich 4 in Form einer Sechskanthöhlung, welcher dem Sechskant 10 des Einzel-Werkstücks 8 formangepaßt ist.

Die Transportrichtung des Einzel-Werkstücks 8 ist in Figur 10 mit x angegeben. In unmittelbarer Nachbarschaft vor der Übergangsstufe 28 zwischen Achshöhlung und unrindem Bereich 4 nimmt eine drehfest mit der Spindel 1 in nicht näher beschriebener Weise verbundene Büchse 29 drei in gleichmäßiger Winkelverteilung angeordnete Winkellagen-Justierkörper K auf. Beim Ausführungsbeispiel sind diese als Rollkörper gestaltet, und zwar als in radialer Einwärtsrichtung abgefederte Kugeln 30. Die vorgenannte Büchse 29 bildet mit einer zentralen Bohrung 31 die Verlängerung der Achshöhlung 11. Die Durchmesser der Achshöhlung 11 und der Bohrung 31 sind gleich groß.

Zur Aufnahme der Kugeln 30 sind in der Büchse 29 Löcher 32 eingearbeitet, derart, daß der Durchmesser der Löcher 32 sich zur Bohrung 31 hin verringert. Die Kugeln 30 können daher nur um ein bestimmtes Maß in radialer Einwärtsrichtung verlagert werden, und zwar durch die in den Löchern 32 untergebrachten Druckfedern 33. Die durch die Löcher 32 gelegten Mittellinien M verlaufen so, daß sie senkrecht zu den Sechskantflächen des unrunden Bereichs 4 stehen.

Wird durch taktweise Druckluftzufuhr das Einzel-Werkstück 8 durch die Achshöhlung 11 in Richtung des Spannfutters 2 geblasen, so passiert dabei das Einzel-Werkstück die der Übergangsstufe 28 benachbarte, mit den Kugeln 30 bestückte Zone. Diese Kugeln 30 bewirken eine Ausrichtung des Einzel-Werkstücks 8, so daß die Flächen des Sechskants 10 fluchtend verlaufen zu denjenigen des unrunden Bereichs 4 des Spannfutters 2. In Figur 10 ist mit strichpunktierten Linien das zwischen den Kugeln 30 befindliche Einzel-Werkstück 8 dargestellt. Der mit den Längsnuten 9 versehene Arbeitsbereich hat die Übergangsstufe 28 teilweise passiert und ragt bereits in das Spannfutter 2 hinein bzw. in deren unrunden Bereich 4. Aufgrund der fluchtenden Ausrichtung des Sechskants 10 zum unrunden Bereich 4 ist der störungsfreie Weitertransport des Einzel-Werkstücks 8 gegeben, und zwar bis zur Anschlagposition.

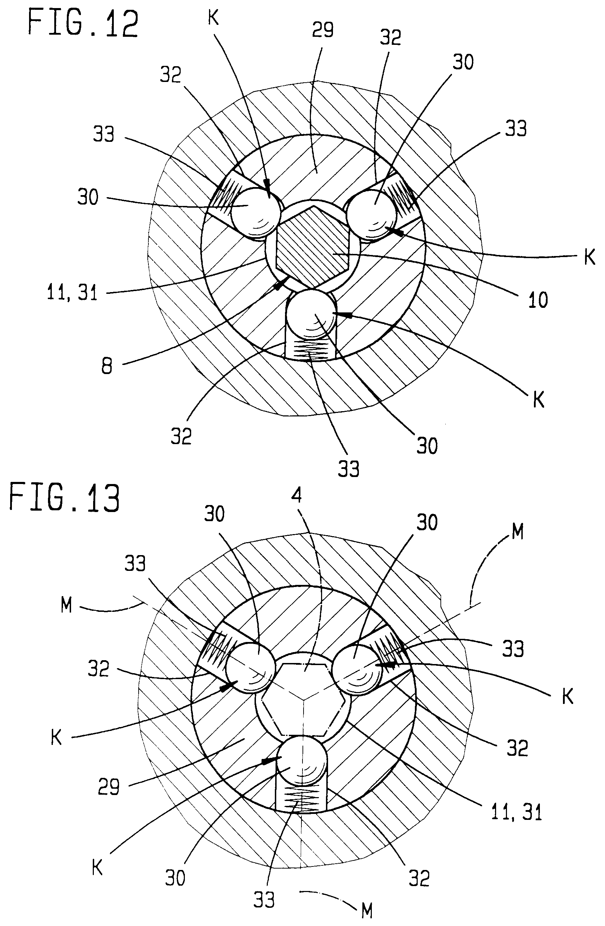

Selbst wenn, wie in Figur 12 dargestellt ist, die ungünstigste Drehausrichtung des Einzel-Werkstücks 8 vorliegt, werden vorerst durch die Ecken des Sechskants 10 die Kugeln 30 entgegen Federwirkung in radialer Auswärtsrichtung verlagert. Die Kugeln 30 bewirken jedoch beim Durchlauf des Werkstücks 8 eine zwangsläufige Drehausrichtung des Einzel-Werkstücks 8, indem sie sich an den entsprechenden Sechskantflächen des Sechskants 10 abstützen wollen und damit die Verdrehung erzwingen, wie in Figur 11 herausgestellt ist.

Es wäre möglich, anstelle der Kugeln 30 auch Rollkörper einzusetzen mit in Achsrichtung liegender Mantelflächenkrümmung, welche der Werkstück-Transportrichtung x zugekehrt ist. Ebenfalls wäre eine entsprechende Abfederung dieser Rollkörper vorzunehmen.

Das von den Kugeln 30 bzw. von der Übergangsstufe 26, 28 ausgebildete Bremsorgan vermindert die Geschwindigkeit des in das Eingangsende 12 des Zuführungskanals 11 eingeschossenen Werkstücks. Durch stetige Druckluftbeaufschlagung des Werkstückes beim Durchlaufen durch den Zuführungskanal 11 wird das Werkstück bis zum Erreichen des Bremsorganes, also der Übergangsstufe 26, 28 oder der Rollkörper (K) beschleunigt. Beim Erreichen der Querschnittsverminderung wird das Werkstück abgebremst. Die Abbremsung kann bis auf die Geschwindigkeit Null erfolgen. Ohne eine axiale Geschwindigkeit rollt dann das Werkstück im runden Bereich der Achshöhlung 11 zufolge deren Drehung solange ab, bis es querschnittsangepaßt zum unrunden Bereich liegt. Zufolge der stetigen Luftdruckbeaufschlagung wird dann das Werkstück weitertransportiert bis zum Anschlag 24. Für den Fall, daß das Bremsorgan von elastischen in den Zuführkanal 11 ragende Körper K ausgebildet wird, kann die Drehwinkelanpassung der Lage des Werkstückes auch durch eine Verklemmung erfolgen. In diesem Falle findet darüber hinaus eine sanfte Abbemsung statt.

## Patentansprüche

1. Werkzeugmaschine mit Zuführungseinrichtung mit am freien Ende einer Spindel angeordnetem Werkstück-Spannfutter, welchem das Werkstück axial durch das Innere der Spindel von rückwärts mittels Druckluft von einer Druckluft-Blasdüse (22) durch die Spindel (1) in das Werkstück-Spannfutter (2) zugeführt wird, mit einer vor Kopf des Werkstück-Spannfutters angeordnetem Werkzeug-Station, und mit einem vor den Kopf des Werkstück-Spannfutters (2) im Bearbeitungstakt tretenden Anschlag (24) zum Abstoppen der Bewegung des Einzel-Werkstückes (8), gekennzeichnet durch ein in der Achshöhlung (11) der Spindel (1) zwischem dem Eingangsende (12) der Achshöhlung und dem Spannfutter (2) angeordnetes Bremsorgan, welches als elastisch ausweichbarer Vorsprung in den Querschnitt des rotierenden von der Achshöhlung (11) gebildeten Zuführungskanal ragt.

2. Werkzeugmaschine nach Anspruch 1 dadurch gekennzeichnet, daß das Bremsorgan in Transportrichtung unmittelbar vor dem Spannfutter angeordnet ist.

3. Werkzeugmaschine nach Anspruch 1 oder 2 dadurch gekennzeichnet, daß zum Zuführen von Werkstücken (8) mit unrunden, z.B. mehreckigen Querschnitten, z.B. Bits (B) die Druckluft das Werkstück (8) gegen eine sich kontinuierlich drehende Übergangsstufe (26, 28) zwischen unrunder, dem Werkstück-Querschnitt angepaßten Querschnittsform und einer dazu einhüllenden Querschnittsform der Achshöhlung (11) der Spindel (1) drückt und zur Drehmitnahme im unrunden Bereich (4) übergeht.

4. Werkzeugmaschine nach einem der Ansprüche 1 bis 2, gekennzeichnet durch eine die Einzel-Werkstücke (8) hintereinanderliegend aufnehmbare Rutsche (14) und eine zwischen dieser und dem Eingangsende (12) der Achshöhlung (11) der Spindel (1) angeordnete Vorrichtung (13) zum Abteilen je eines Werkstückes (8) in die Einschießposition vor dem Eingangsende (12), rückwärts welcher Abteil-Vorrichtung eine Druckluft-Blasdüse (22) angeordnet ist.

5. Werkzeugmaschine nach Anspruch 4, dadurch gekennzeichnet, daß die Abteil-Vorrichtung aus einem im Takt hin- und zurückgesteuerten Schieber (19) besteht.

6. Werkzeugmaschine nach einem der Ansprüche 1 bis 5, dadurch gekennzeichnet, daß der Anschlag zum Abstoppen des Einzel-Werkstückes (8) von einem im Bearbeitungstakt hin- und rückfahrenden Finger gebildet ist.

7. Werkzeugmaschine nach einem der Ansprüche 1 bis 6, dadurch gekennzeichnet, daß die Übergangsstufe (26) vom einhüllenden Querschnitt in den unrunden Querschnitt im Bereich des Werkstück-Spannfutters (2) liegt.

8. Werkzeugmaschine nach einem der Ansprüche 1 bis 7, dadurch gekennzeichnet, daß die Werkstück-Station (6) als Schlagmesser-Fräskopf gestaltet ist, dessen Werkzeugwelle (5) sich vor Kopf des Werkstück-Spannfutters (2) versetzt zur Spindel (1) erstreckt und in einem konstanten Drehzahlverhältnis zur Spindel (1) umläuft, welches abhängig ist von der Anzahl der am freien Ende des Einzel-Werkstücks (8) anzubringenden Profilflächen z.B. Längsnuten (9).

9. Werkzeugmaschine nach einem der Ansprüche 7 oder 8, dadurch gekennzeichnet, daß die Werkzeugwelle (5) in Gegenüberlage angeordnet ist zu dem den Anschlag (24) bildenden Finger.

10. Werkzeugmaschine nach einem der Ansprüche 4 bis 8, dadurch gekennzeichnet, daß der Abteilschieber (19) eine unterhalb der Rutsche (14) tretende Nut (20) zum Einfallen des Einzel-Werkstücks (8) besitzt, welche Nut (20) nach Übertritt des Schiebers (19) in seine Position vor dem Eingangsende (12) der Spindel (1) von einer Decke (25) der Vorrichtung verschlossen ist.

11. Werkzeugmaschine nach einem der Ansprüche 1 bis 10, gekennzeichnet durch vom Bremsorgan ausgebildete Winkellagen-Justierkörper (K), welche als Rollkörper mit in Achsrichtung liegender Mantelflächenkrümmung gestaltet sind, welche der Werkstück-Transportrichtung (x) zugekehrt ist.

12. Werkzeugmaschine nach Anspruch 11, dadurch gekennzeichnet, daß bei Sechskantquerschnitt des unrunden Bereichs (4) drei Rollkörper in gleichmäßiger Winkelverteilung vorgesehen sind.

13. Werkzeugmaschine nach Anspruch 12, dadurch gekennzeichnet, daß die Rollkörper als bis auf das Maß des Mehrkants (10) vortretende Kugeln (30) gestaltet sind.

## Claims

1. Machine tool with feed device having a workpiece clamping chuck which is arranged at the free end of a spindle and to which the workpiece is fed axially through the interior of the spindle from behind by means of compressed air from a compressed air blast nozzle (22), through the spindle (1) into the workpiece clamping chuck (2), having a tool station arranged in front of the head of the workpiece clamping chuck, and having a limit stop (24) moving in front of the head of the workpiece clamping chuck (2) in time with the machining for stopping the movement of the individual workpiece (8), characterised by a braking element arranged in the axial cavity (11) of the spindle (1) between the inlet end (12) of the axial cavity and the clamping chuck (2) which braking element projects as an elastically yielding projection into the cross section of the rotating feed channel formed by the axial cavity (11).

2. Machine tool according to Claim 1, characterised in that the braking element is arranged directly in front of the clamping chuck in the transport direction.

3. Machine tool according to Claim 1 or 2, characterised in that for feeding workpieces (8) having non-circular, eg polygonal, cross sections, eg bits (B), the compressed air pushes the workpiece (8) against a continuously rotating transition stage (26, 28) between a non-circular cross-sectional shape adapted to the cross section of the workpiece and a cross-sectional shape of the axial cavity (11) of the spindle (1) enveloping the latter and passes over into rotary locking in the non-circular region (4).

4. Machine tool according to one of Claims 1 to 2, characterised by a chute (14) accommodating the individual workpieces (8) located one behind the other, and a device (13) arranged between the chute and the inlet end (12) of the axial cavity (11) of the spindle (1) for partitioning each individual workpiece (8) into the injection position in front of the inlet end (12), to the rear of which partitioning device a compressed air blast nozzle (22) is arranged.

5. Machine tool according to Claim 4, characterised in that the partitioning device consists of a slider (19) controlled to move to and fro in time.

6. Machine tool according to one of Claims 1 to 5, characterised in that the limit stop for stopping the individual workpieces (8) is formed by a finger moving to and fro in time with the machining.

7. Machine tool according to one of Claims 1 to 6, characterised in that the transition stage (26) from the enveloping cross section to the non-circular cross section is located in the region of the workpiece clamping chuck (2).

8. Machine tool according to one of Claims 1 to 7, characterised in that the workpiece station (6) is designed as a fly cutter milling head the tool shaft (5) of which extends, offset to the spindle (1), in front of the head of the workpiece clamping chuck (2) and revolves at a constant speed ratio with respect to the spindle (1), which ratio is dependent on the number of profile surfaces, eg longitudinal grooves (9), to be placed at the free end of the individual workpiece (8).

9. Machine tool according to one of Claims 7 or 8, characterised in that the tool shaft (5) is arranged in a position opposite the finger forming the limit stop (24).

10. Machine tool according to one of Claims 4 to 8, characterised in that the partitioning slider (19) possesses a groove (20) beneath the chute (14) for the individual workpiece (8) to fall into, which groove (20) is closed after passage of the slider (19) into its position in front of the inlet end (12) of the spindle (1) by a cover (25) of the device.

11. Machine tool according to one of Claims 1 to 10, characterised by angular position adjusting bodies (K) formed by the braking body, which are designed as roller bodies having a curved outer surface lying in the axial direction and facing towards the workpiece transport direction (x).

12. Machine tool according to Claim 11, characterised in that in the case of a hexagonal cross section for the non-circular region (4) three roller bodies are provided at a uniform angular distribution.

13. Machine tool according to Claim 12, characterised in that the roller bodies are shaped as balls (30) projecting forward as far as the size of the polygonal body.

## Revendications

1. Machine-outil équipée d'un dispositif d'alimentation avec un mandrin de serrage de pièce à usiner, disposé à l'extrémité libre d'une broche, et auquel la pièce à usiner est amenée axialement en passant par l'intérieur du mandrin, depuis l'arrière, par utilisation d'air comprimé venant d'une buse de soufflage d'air comprimé (22), en passant par la broche (1) dans le mandrin de serrage de pièce à usiner (2), avec un poste d'outillage disposé devant la tête du mandrin de serrage de pièce à usiner et avec une butée (24) passant en phase d'usinage devant la tête du mandrin de serrage de pièce à usiner (2) pour stopper le déplacement de la pièce à usiner (8) spécifique, caractérisée par un organe de freinage disposé dans la cavité axiale (11) de la broche (1) entre l'extrémité d'entrée (12) de la cavité axiale et le mandrin de serrage (2), organe de freinage pénétrant, à titre de saillie déformable élastiquement, dans la section transversale du canal d'alimentation tournant, constitué par la cavité axiale (11).

2. Machine-outil selon la revendication 1, caractérisée en ce que l'organe de freinage est disposé directement devant le mandrin de serrage, dans la direction de transport.

3. Machine-outil selon la revendication 1 ou 2, caractérisée en ce que, pour assurer l'alimentation en pièces à usiner (8) présentant des sections transversales non rondes, par exemple polygonales, par exemple des tiges (B), l'air comprimé presse la pièce à usiner (8) contre un étagement de transition (26, 28) tournant en continu, entre une forme de section transversale non ronde adaptée à la section transversale de la pièce à usiner, et une forme de section transversale, enveloppante, de la cavité axiale (11) de la broche (1) et se prolonge par une zone (4) non ronde pour assurer l'entraînement en rotation.

4. Machine-outil selon l'une des revendications 1 à 2, caractérisée par une goulotte (14) recevant les pièces à usiner (8) individuelles placées les unes derrière les autres, et un dispositif (13) disposé entre cette goulotte et l'extrémité d'entrée (12) de la cavité axiale (11) de la broche (1), en vue d'individualiser chaque pièce à usiner (8) dans la position de chargement devant l'extrémité d'entrée (12), dispositif d'individualisation à l'arrière duquel est disposée une buse de soufflage d'air comprimé (22).

5. Machine-outil selon la revendication 4, caractérisée en ce que le dispositif d'individualisation est constitué par un poussoir (19) commandé de façon cadencée pour effectuer un déplacement d'aller et de retour.

6. Machine-outil selon l'une des revendications 1 à 5, caractérisée en ce que la butée, destinée à stopper la pièce à usiner (8) individuelle, est constituée par un doigt se déplaçant dans un sens et dans l'autre au cours du cycle d'usinage.

7. Machine-outil selon l'une des revendications 1 à 6, caractérisée en ce que l'étagement de transition (26), entre la section transversale enveloppante et la section transversale non ronde, est situé dans la zone du mandrin de serrage de pièce à usiner (2).

8. Machine-outil selon l'une des revendications 1 à 7, caractérisée en ce que le poste à pièces à usiner (6) est réalisé sous la forme de tête de fraisage à dent en saillie, dont l'arbre d'outil (5) s'étend devant la tête du mandrin de serrage de pièce à usiner (2), de façon décalée par rapport à la broche (1), et tourne à une vitesse de rotation qui est dans un rapport constant par rapport à celle de broche (1), rapport dépendant du nombre de surfaces profilées, par exemple de rainures longitudinales (9), à réaliser à l'extrémité libre de la pièce à usiner (8) individuelle.

9. Machine-outil selon l'une des revendications 7 ou 8, caractérisée en ce que l'arbre d'outil (5) est disposé en position opposée vis-à-vis du doigt constituant la butée (24).

10. Machine-outil selon l'une des revendications 4 à 8, caractérisée en ce que le poussoir d'individualisation (19) comporte une rainure (20) s'étendant sous la goulotte (14) en vue de permettre la chute de la pièce à usiner (8) individuelle, ladite rainure (20) étant fermée par un couvercle (25) du dispositif après passage du poussoir (19) dans sa position située devant l'extrémité d'entrée (12) de la broche (1).

11. Machine-outil selon l'une des revendications 1 à 10, caractérisée par des corps d'ajustement de position angulaire (K), constitués par l'organe de freinage et qui présente la configuration de corps de roulement avec une courbure de la surface d'enveloppe orientée dans la direction axiale et tournée vers la direction de transport des pièces à usiner (x).

12. Machine-outil selon la revendication 11, caractérisée en ce que, lorsque la section transversale de la zone (4) non ronde est à six pans, sont prévus trois corps de roulement placés suivant une distribution angulaire régulière.

13. Machine-outil selon la revendication 12, caractérisée en ce que les corps de roulement sont réalisés sous la forme de billes (30) dépassant du contour du polygone (10).
